# EUROPEAN PATENT APPLICATION

(11) **EP 2 287 954 A2**
(43) Date of publication of application: **23.02.2011**
(21) Application number: 10194752.1
(22) Date of filing: 21.02.2006
(51) Int. Cl.: H01M 8/04, H01M 8/06

(54) **Solid oxide type fuel cell and operating method thereof**

(30) Priority: 22.02.2005 JP 2005045252; 13.04.2005 JP 2005115828; 02.11.2005 JP 2005319628; 21.02.2006 JP 2006043355
(62) Divisional of application: 06714166.3
(71) Applicant: Mitsubishi Materials Corporation, Tokyo 100-0004 (JP); The Kansai Electric Power Co., Inc., Osaka-shi, Osaka 530-8270 (JP)
(72) Inventor: Akikusa, Jun, 1002-14 Mukohyama, Naka-shi, Ibaraki Ibaraki 311-0102 (JP); Chitose, Norihisa, 1002-14 Mukohyama, Naka-shi, Ibaraki Ibaraki 311-0102 (JP)
(74) Representative: Gillard, Richard Edward

(57) **Abstract**

It is possible to rapidly start a fuel cell and perform temperature increase operation and temperature decrease operation at start/stop without providing a separate purge gas supply system. The solid oxide type fuel cell includes a reformer (21) or the reformer (21) together with a water vapor generator (22), and a heating device (24) for heating at least the reformer (21) which are arranged in a housing (20). In the fuel cell operation method, upon start or stop of the operation, the reformer (21) generates a reductive gas containing hydrogen by a partial oxidization reforming reaction or auto-thermal reforming reaction and supplies the reductive gas to the fuel electrode side of the generation cell, thereby increasing or decreasing the temperature of the fuel cell while maintaining the fuel electrode atmosphere in a reduction condition.

## Description

### Technical Field

The present invention relates to a solid oxide type fuel cell, and more particularly to an operating method of a fuel cell at the time of actuation or shutdown.

### Background Art

The above solid oxide type fuel cells are under development as third generation fuel cells for power generation use, and at present three different types including cylindrical, monolithic and planar stacked types of such cells are known. Any of these solid oxide type fuel cells has a stacked structure in which a solid electrolyte layer consisting of an oxide ion conductor is sandwiched between an air electrode layer (cathode) and a fuel electrode layer (anode); in the case of the planar stacked type for instance, a plurality of power generating cells each consisting of such stacked structure and separators are alternately laid one over the other to form a stacked body and accommodated into a housing to constitute a module.

In a solid oxide type fuel cell, oxidant gas (oxygen) is supplied to the air electrode layer side and fuel gas (H₂, CO, CH₄ or the like) is supplied to the fuel electrode layer side as reactive gases. Porous layers are used as both the air electrode layer and the fuel electrode layer to enable the reactive gases to reach the interface with the solid electrolyte layer.

In the power generating cell, the oxygen supplied to the air electrode layer side passes pores in the air electrode layer and reaches the vicinities of the interface with the solid electrolyte layer, where it receives electrons from the air electrode layer to be ionized into oxide ions (O²⁻). These oxide ions diffusively move within the solid electrolyte layer toward the fuel electrode layer. The oxide ions having reached the vicinity of the interface with the fuel electrode layer react therein with fuel gas to generate reaction products (including H₂O and CO₂) and discharge electrons into the fuel electrode layer.
The electrons generated by such an electrode reaction can be taken out as electromotive force by an external load on a separate route.

Incidentally, when conventionally known fuel cells including such solid oxide type fuel cells are to be operated (caused to generate electricity), it is necessary to preheat the fuel cell stack (especially power generating cells) to the working temperature of each fuel cell. This is to activate the electrochemical reaction of the power generating cells (see Patent Document 1).

Conventionally, when a fuel cell stack is to be raised in temperature to prepare for the start of operation, a heating device such as an electric heater or a burner is arranged on the periphery of the fuel cell stack, and the stack surface is heated with radiant heat from the heating device. This preheating method using radiant heat, however, involves a problem that a long time is needed to raise the temperature and accordingly a long time (e.g. about eight hours) is taken before the power generating operation is started. Moreover, if the temperature is to be raised with an electric heater, power consumption is extremely high, inviting a problem of extra power consumption before power generation by the fuel cells starts.

Incidentally, in such fuel cells, the ambient atmosphere of the fuel electrode is kept in a reduction condition by supplying inert gas (e.g. nitrogen gas) containing a minute quantity of hydrogen to the power generating cells in the temperature rising/falling process at the time of actuation or shutdown; this process is known as purging (see Patent Document 2 for instance).
This is to prevent the fuel electrode from being oxidized by the oxygen remaining within the fuel cells in the high temperature state at the time of actuation/shutdown. Oxidization of the fuel electrode would extremely deteriorate the power generating performance.

Solid oxide type fuel cells in particular, because of their extremely high working temperature of 600 to 1000°C, are difficult to start or stop rapidly and take a long time to start or stop, resulting in the susceptibility of the fuel electrode to oxidation; especially in a seal-less structure having no gas leak-preventive seal in the outer circumferential part of power generating cells where external oxygen-containing gas can more easily flow into the cells, massive purging is required at the time of actuation or shutdown and, furthermore, the increase in the size of fuel cells entails a proportional increase in the quantity of nitrogen gas used.

Conventionally, purging is predominantly accomplished by providing dedicated gas cylinders separately, nitrogen gas and hydrogen for the purging purpose are supplied from them to the fuel gas supply route, and this involves a problem that the whole fuel cell system, including the gas cylinders and the nitrogen gas supply route, is enlarged in size with a consequence of complicating the maintenance work.
Patent Document 1: Japanese Patent Laid-Open No. 8-162137
Patent Document 2: Japanese Patent Laid-Open No. 2-244559

### Disclosure of the Invention

A first object of the present invention is to provide a solid oxide type fuel cell in which reductive reformed gas containing hydrogen is generated from the initial stage of actuation by heating a reformer and a water vapor generator in the fuel module with a heating device at the time of actuation, and is enabled to be actuated rapidly while being supplied with this purge gas on the fuel electrode side of the power generating cell and an operating method of this fuel cell, and further to utilize this operating method to totally dispense with nitrogen conventionally needed for preventing the fuel electrode from being oxidized.

A second object of the invention is to provide a fuel cell operating method which enables the temperature raising and lowering actions at the time of actuation and shutdown to be accomplished without requiring a separate purging gas supply line.

A third object of the invention is to provide a fuel cell power generating device and a shutdown method permitting the accomplishment of purging without requiring a separate purging gas supply line.

### [First Mode for Implementing the Invention]

In order to achieve the first object stated above, a solid oxide type fuel cell in a first mode for implementing the invention is a solid oxide type fuel cell wherein a fuel cell assembly is formed by aggregating a plurality of power generating cells and accommodating the assembly into a housing and a power generating reaction is generated by supplying reformed gas into the fuel cell assembly during operation, characterized in that a reformer or a reformer and a water vapor generator are installed in the housing and a heating device for heating at least the reformer is arranged.
The meaning of the fuel cell assembly in this context includes a fuel cell stack in which a plurality of power generating cells and separators are alternately laid one over the other like a planar stacked type fuel cell or a plurality of power generating cells are aggregated and connected via connecting members (interconnectors) into a bundle, like cylindrical fuel cells.

An electric heater or a combustive burner, for instance, can be used as the heating device.

Also, it is desirable to arrange on the periphery of the fuel cell assembly a combustion catalyst for burning reformed gas discharged from the fuel cell assembly or a heater for igniting reformed gas.

As the solid oxide type fuel cell, it is possible to use a solid oxide type fuel cell of seal-less structure wherein the residual gas not used in the power generating reaction is burned outside the fuel cell assembly.

An operating method of a solid oxide type fuel cell in the first mode for implementing the invention is an operating method of a solid oxide type fuel cell in which a fuel cell assembly is formed by aggregating a plurality of power generating cells and accommodating the assembly into a housing and a power generating reaction is generated by supplying reformed gas into the fuel cell assembly during operation, characterized in that a reformer, a water vapor generator and a heating device are provided; at least the reformer is heated with the heating device at the time of actuating the fuel cell; fuel gas and water vapor from the water vapor generator are supplied to the reformer which has been heated to generate reformed gas whose main component is hydrogen; and the reformed gas is supplied to the fuel cell assembly to raise the temperature of the fuel cell assembly while keeping the fuel electrode of the power generating cell in a reduction condition.

It is desirable in the operating method of the solid oxide type fuel cell for the reformed gas whose main component is hydrogen supplied to the fuel cell assembly to be discharged from the fuel cell assembly and burned to raise the temperature of the fuel cell assembly.

According to the first mode for implementing the invention, as a reformer and a water vapor generator equipped with a heating device are installed in a housing into which a fuel cell assembly is accommodated and these reformer and water vapor generator are heated with the heating device when the fuel cell is actuated, it is made possible to supply the reformed gas whose main component is hydrogen into the fuel cell assembly from immediately after the actuation and to keep the fuel electrode side of the power generating cell in a reduction condition without having to use nitrogen gas. Furthermore, as the fuel cell assembly can be heated in a short period of time by burning the residual reformed gas in the vicinity of the fuel cell assembly, the fuel cell is enabled to be rapidly actuated.
Moreover, once the combusting reaction is started, as the reformer and the water vapor generator are heated by that combustion heat, heating with the heating device as at the time of actuation is no longer necessary. This enables power consumption by an electric heater, for instance, used as the heating device, to be significantly reduced.

### [Second Mode for Implementing the Invention]

In order to achieve the second object stated above, an operating method of a fuel cell in a second mode for implementing the invention is an operating method of a fuel cell whereby raw fuel is reformed with a reformer and the reformed gas is supplied to a power generating cell to perform power generating operation, characterized in that the fuel cell is raised in temperature at the time of starting operation while keeping the ambience of the fuel electrode in a reduction condition by generating with the reformer reductive gas containing hydrogen by partial oxidation reforming reaction or auto-thermal reforming reaction and supplying that gas to the fuel electrode of the power generating cell.

It is desirable, in the operating method of the fuel cell described above, for the unburned fuel gas discharged from the fuel cell to be burned with combusting means and the resultant combustion heat to be utilized for raising the temperature.

Another operating method of the fuel cell in the second mode for implementing the invention is an operating method of the fuel cell whereby a reformer is provided, raw fuel is reformed with this reformer and the reformed gas is supplied to a power generating cell to perform power generating operation, characterized in that the fuel cell is lowered in temperature at the time of shutdown while keeping the ambience of the fuel electrode in a reduction condition by generating with the reformer reductive gas containing hydrogen by partial oxidation reforming reaction or auto-thermal reforming reaction and supplying that gas to the fuel electrode of the power generating cell.

It is desirable for the ambience of the fuel electrode to be kept in a reduction condition until the temperature of the fuel cell at least is lowered to 300°C or below.

As the fuel cell referred to above, it is possible to use, for example, a solid oxide type fuel cell of seal-less structure wherein the residual gas not used in the power generating reaction is burned outside the fuel cell assembly.

According to the second mode for implementing the invention, as a reforming reaction is caused to take place in the reformer by the heating which accompanies the partial oxidation reaction or the auto-thermal reaction at the time of actuation or shutdown to generate reductive gas containing hydrogen and the supply of this reductive gas to the fuel electrode enables the fuel electrode of the power generating cell to be kept in a reduction condition, oxidation of the power generating cell in the temperature rising or falling cycle and the consequent performance deterioration of the power generating cell can be prevented, and this feature contributes to elongating the service life.
In addition, since no purge requiring a large quantity of nitrogen gas as in the conventional practice is needed, the need to install a purging gas supply line including a nitrogen cylinder, for instance, is eliminated, resulting in simplified maintenance work.
Furthermore, where the unburned gas discharged from the fuel cell is burned by combusting means, the heat of combustion facilitates raising the temperature of the fuel cell including the reformer, and this serves to reduce the length of time required for actuation.

### [Third Mode for Implementing the Invention]

In order to achieve the third object stated above, a fuel cell shutdown method in the third mode for implementing the invention is a fuel cell shutdown method whereby a power generating reaction is generated by supplying fuel gas to the fuel electrode layer side and oxidant gas to the air electrode layer side, characterized in that the stack temperature is lowered while keeping the fuel electrode layer side in a reduction condition by supplying water and hydrogen or hydrocarbon fuel to the fuel cell while reducing the flow rate thereof at the time of stopping power generation.
This method is to maintain the reduction condition by generating water vapor by utilizing the thermal capacity of the fuel cell while continuing to supply small quantities of water and fuel gas even after the stop of power generation, and supplying a mixture of reformed gas and water vapor to the fuel electrode.

In the fuel cell shutdown method described above, it is desirable for the supply quantity of the hydrogen or hydrocarbon fuel to be so reduced that the cell voltage of the fuel cell is 0.5 V or above when the stack temperature is 300°C.
Although there is a fear that, if the supply of fuel gas is stopped at a stack temperature of not below 300°C, that the fuel electrode layer side is oxidized and deteriorates, the fuel electrode layer side can be kept in a reduction condition by decreasing gradually the supply of fuel gas so that the cell voltage may not fall below 0.5 V until the stack temperature drops to around 300°C.

It is also desirable in the fuel cell shutdown method described above for the supply quantity of water, when the supply of water to the fuel cell is to be stopped, to be reduced so that the water vapor temperature attributable to the water is not less than 200°C. If the water vapor temperature were 200°C or below when the supply of water is stopped, the temperature of the water vapor would drop rapidly to 100°C to make continuous generation of water vapor difficult. As a result, liquid water would be supplied into the cell, and the cell might be deteriorated or cracked. For this reason, the water vapor temperature at the time of stopping the supply of water should be 200°C or above.

A fuel cell power generating device in the third mode for implementing the invention is characterized in that it is provided with fuel cells which supply electric power according to the supply quantity of fuel gas and the supply quantity of oxidant gas, a fuel supply line which supplies fuel gas to the fuel cells, an oxidant gas supply line which supplies oxidant gas, a water supply line which supplies water, and a control unit which performs the shutdown control referred to above.

As the fuel cells referred to above, it is possible to use solid oxide type fuel cells of seal-less structure wherein the residual gas not used in the power generating reaction is discharged from the outer circumferential part of power generating cells.

In the third mode for implementing the invention, the fuel electrode layer can be kept in the reduction condition at the time of stopping power generation by supplying water and hydrogen or hydrocarbon fuel to the fuel cells while reducing the flow rates thereof, and oxidation of the power generating cells in the temperature rising or falling cycle and the consequent performance deterioration of the power generating cells can be prevented, thereby enabling the service life to be elongated.
In addition, since no purge requiring inert gas as in the conventional practice is needed, the need to install a purging gas supply line including an inert gas cylinder (e.g. a nitrogen cylinder) is eliminated, enabling the maintenance work to be simplified as well as the hardware itself to be reduced in size.

### Brief Description of the Drawings

Figure 1 is a diagram showing the schematic internal configuration of a solid oxide type fuel cell in the first mode for implementation to which the invention is applied;
Figure 2 is a diagram showing gas flows in the fuel cell stack during operation;
Figure 3 is a diagram showing a state of installation of a heating device relative to a reformer and a water vapor generator;
Figure 4 is a diagram showing another state of installation of the heating device relative to the reformer and the water vapor generator different from the state shown in Figure 3;
Figure 5 is a diagram showing the schematic internal configuration of a solid oxide type fuel cell in the second mode for implementation to which the invention is applied;
Figure 6 is a diagram showing the internal arrangement of a solid oxide type fuel cell in the second mode for implementation to which the invention is applied;
Figure 7 is a diagram showing the configuration of the essential part of the fuel cell stack of Figure 5;
Figure 8 is a diagram showing the schematic configuration of a fuel cell power generating device in the third mode for implementation to which the invention is applied;
Figure 9 is a diagram showing the configuration of a solid oxide type fuel cell stack for use in the fuel cell power generating device of Figure 8; and
Figure 10 is a diagram showing the shutdown control figure according to the invention.

### Description of Symbols

- 1: Fuel cell assembly (fuel cell stack)
- 5: Power generating cell
- 8: Separator
- 20: Housing
- 21: Reformer
- 22: Water vapor generator
- 23: Combustion catalyst
- 24: Heating device (electric heater, combustion burner)
- 103: Fuel electrode
- 105: Power generating cell
- 121: Reformer
- 123, 124: Combusting means (combustion catalyst, auxiliary electric heater)
- 201: Fuel cell (fuel cell stack)
- 203: Fuel electrode layer
- 204: Air electrode layer
- 220: Control unit
- 230: Oxidant gas supply line
- 240: Fuel supply line
- 250: Water supply line

### Best Modes for Carrying Out the Invention

### [First Embodiment]

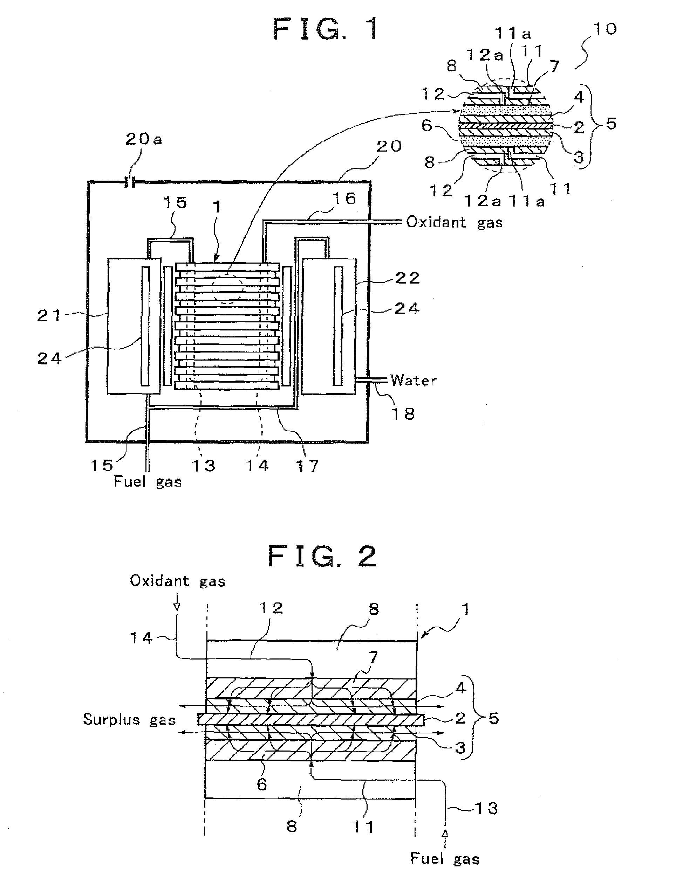

This first embodiment corresponds to the first mode for implementing the invention.
The first embodiment of the invention will be described below with reference to Figure 1 through Figure 4.

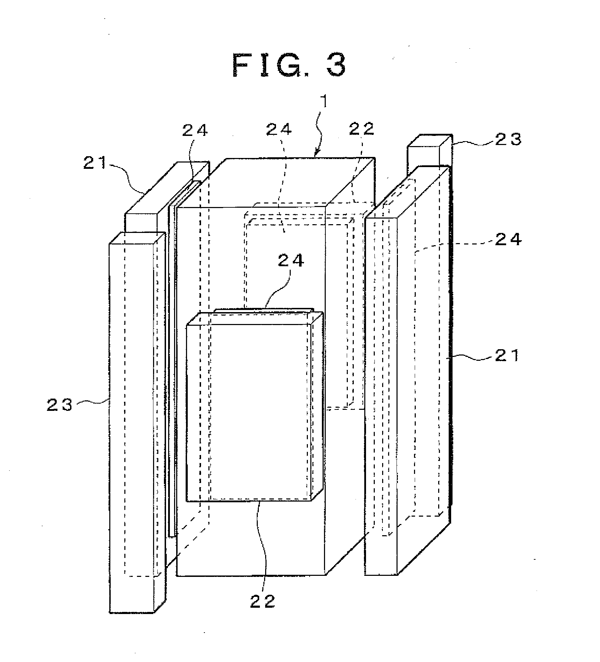

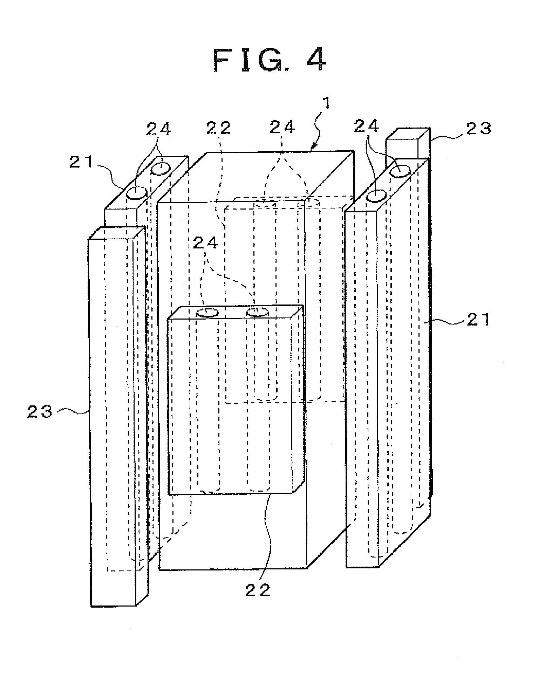

Figure 1 shows the schematic internal configuration of a solid oxide type fuel cell to which the invention is applied; Figure 2, gas flows in the fuel cell stack during operation; and Figure 3 and Figure 4, states of installation of a heating device relative to a reformer and a water vapor generator.

As shown in Figure 1, the solid oxide type fuel cell (fuel cell module) of this embodiment has a housing 20 (drum) on whose internal wall an insulator (not shown) for heat retaining is arranged, a fuel cell stack 1 which causes a power generating reaction to occur is arranged at the center of this housing 20, and a reformer 21, a water vapor generator 22 and so forth are arranged on the periphery of this fuel cell stack 1.

The reformer 21, packed inside with a Ni (nickel)-based or Ru (ruthenium)-based reforming catalyst for use with hydrocarbon, can reform hydrocarbon fuel gas supplied from outside into fuel gas mainly consisting of hydrogen.
The water vapor generator 22 is a heat exchanger for obtaining high temperature water vapor required for the reforming reaction, is arranged in a position opposing the central part of the fuel cell stack as shown in Figure 3 or Figure 4 for instance so that it can absorb more of exhaust heat from the fuel cell stack 1, and guides high temperature water vapor to the reformer 21 via a water vapor guide pipe 17.

The fuel cell stack 1 is configured by stacking in the longitudinal direction a large number of unit cells 10 each configured of power generating cells 5 on both faces of whose solid electrolyte layer 2 a fuel electrode layer 3 and an air electrode layer 4 are arranged, a fuel electrode current collector 6 arranged outside the fuel electrode layer 3, an air electrode current collector 7 arranged outside the air electrode layer 4 and separators 8 arranged outside the current collectors 6 and 7.

In the unit cells 10 structured as described above, the solid electrolyte layer 2 is configured of yttria-stabilized zirconia (YSZ) or the like; the fuel electrode layer 3, of a metal such as Ni or Co or a cermet such as Ni-YSZ, Co-YSZ; the air electrode layer 4, of LaMnO₃, LaCoO₃ or the like; the fuel electrode current collector 6, of a spongy porous sintered metal plate of Ni-based alloy or the like; the air electrode current collector 7, of a spongy porous sintered metal plate of Ag-based alloy or the like; and the separators 8, of stainless steel or the like.

The separators 8 have a function to electrically connect the power generating cells 5 to one another and to supply reactive gas to the power generating cells 5; they have fuel gas passages 11 which let in fuel gas (reformed gas) from the outer circumferential faces of the separators 8 and discharge it from the substantially central parts 11a of the faces of the separators 8 opposite the fuel electrode current collector 6 and oxidant gas passages 12 which let in oxidant gas from the outer circumferential faces of the separators 8 and discharge it from substantially the centers 12a of the faces of the separators 8 opposite the air electrode current collector 7.

Within the fuel cell stack 1 a fuel gas manifold 13 and an oxidant gas manifold 14 extending in the stacking direction are formed as shown in Figure 1; a fuel gas guide pipe 15 from the reformer 21 is connected to the fuel gas manifold 13, and an oxidant gas guide pipe 16 guided from outside is connected to the oxidant gas manifold 14.

This solid oxide type fuel cell is formed in a seal-less structure having no anti-gas leak seal on the outer circumferential part of the power generating cells 5; when in operation, as shown in Figure 2, fuel gas (reformed gas) and oxidant gas (air) supplied from the substantially central parts of the separators 8 to the power generating cells 5 through the fuel gas passages 11 and the oxidant gas passages 12 are distributed evenly all over the fuel electrode layer 3 and the air electrode layer 4 while being diffused in the outer circumferential direction of the power generating cells 5 to cause a power generating reaction to take place, and surplus gas (exhaust gas) not consumed in power generating reaction is freely discharged from the outer circumferential part of the power generating cells 5 within the housing 20.
An exhaust port 20a for discharging the exhaust gas within the housing to the outside of the housing is provided in the top part of the housing 20.

Incidentally in this embodiment, heating devices 24 are provided for the reformers 21 and the water vapor generators 22 so that the reformers 21 and the water vapor generators 22 can be heated by thermal conduction. Electric heaters or combustion burners are used as the heating devices 24.

Figure 3 and Figure 4 show how the heating devices 24 are fitted where electric heaters are used as the heating devices 24.
Figure 3 shows a case in which plate-shaped heaters are used; these plate-shaped heaters are fitted to the outer surface of the box-shaped reformers 21 and water vapor generators 22 opposite the side faces of the fuel cell stack 1, and their direct heat warms the reformers 21 and the water vapor generators 22 from outside.
Figure 4 shows a case in which pipe-shaped heaters are used; a plurality (two) of such heaters are arranged within each of the reformers 21 and each of the water vapor generators 22 in the longitudinal direction, and heat the reformers 21 and the water vapor generators 22 from inside.
Incidentally, in the cases illustrated in Figure 3 and Figure 4, two reformers 21 and two water vapor generators 22 are provided respectively on the peripheries of the fuel cell stack 1 in pairs opposite each other with the fuel cell stack 1 in-between, and each of them is provided with a heating device 24.

In two positions near the fuel cell stack 1, combustion catalysts 23 are arranged in the stacking direction as combusting means for facilitating the combustion of surplus gas (reformed gas) discharged from the outer circumferential part of the fuel cell stack 1. As these combustion catalysts 23, for instance what uses thin plate-shaped honeycomb catalysts with Pt, Pd or the like carried by alumina carriers can be applied.
Further, though not shown, ignition heaters or igniters which ignite and burn discharged surplus gas, in place of the combustion catalysts 23, can be arranged in suitable positions near the fuel cell stack as surplus gas combusting means. Also, these combustion catalysts 23 and ignition heaters or igniters can be used in combination. Any of these combusting means are very effective in quickly igniting and burning reformed gas discharged from the fuel cell stack 1 and heating the whole stack efficiently and uniformly.

Next, the operating method of the solid oxide type fuel cells configured as described above will be described.

At the time as the actuation of the fuel cells, the heating devices 24 are operated, the reformers 21 and the water vapor generators 22 are heated and raised in temperature by thermal conduction, fuel gas (hydrocarbon fuel), oxidant gas (air) and water (having gone through heat exchange outside to become high temperature water) are supplied from outside into the fuel cell module respectively through the fuel gas guide pipe 15, the oxidant gas guide pipe 16 and a water supply pipe 18. As the reformers 21 and the water vapor generators 22 are heated by the heating devices 24 from outside (in the case of Figure 3) or inside (in the case of Figure 4) by thermal conduction, the reformers 21 are raised to a sufficiently high temperature for reforming and the water vapor generators 22 begin to generate high temperature water vapor in only a few minutes.

Hydrocarbon-based fuel gas is joined and mixed in the fuel gas guide pipe 15 with high temperature water vapor guided by the water vapor guide pipe 17 from the water vapor generators 22 and guided into the reformers 21, and hydrocarbon-based fuel gas is reformed in the reformers 21 into fuel gas mainly consisting of hydrogen by the action of the reforming catalyst for use with hydrocarbon. This reforming reaction is an endothermic reaction, and the high temperature heat required for the reforming reaction (650 to 800°C) is obtained by receiving direct heat from the appended heating devices 24.

The reformed gas generated by the reformers 21 is guided to the fuel gas manifold 13 in the fuel cell stack 1 and introduced into the separators 8 through the manifold 13. Together with air introduced through the oxidant gas manifold 14, these reactive gases pass the inside of the separators 8 and flow to diffuse in the outer circumferential direction from the substantially central parts of the power generating cells 5. This reformed gas is reductive gas containing hydrogen, and keeps the fuel electrode side of the power generating cells 5 in a reduction condition.
Surplus gas mainly consisting of hydrogen, which is not used in the power generating reaction, is discharged out as it is from the outer circumferential part of the fuel cell stack 1, and promptly ignited and burned by the combusting means (combustion catalysts, ignition heaters or igniters).

In this way, according to the invention, reformed gas mainly consisting of hydrogen obtained by the reforming reaction can be supplied into the fuel cell stack from immediately after actuation, and moreover the fuel cell stack can be heated and raised in temperature in a short period of time by burning the reformed gas mainly consisting of hydrogen in the vicinity of the stack, thereby enabling the fuel cell to be rapidly actuated.
Incidentally, the time taken until the start of power generation (rated operation) can be reduced to three hours or less, much shorter than the usual eight hours. In addition, the introduction of nitrogen gas into the stack for preventing oxidation (nitrogen purge) conventionally required at the time of starting operation is made unnecessary, making the installation of a nitrogen gas cylinder or piping arrangement dispensable with a corresponding saving in cost.

Furthermore, once the combustion reaction is started, the nearby reformers 21 and water vapor generators 22 are heated by that combustion heat, and therefore the heating by the heating devices 24 used at the time of actuation becomes no longer necessary.
In this embodiment, the heating devices 24 need to be worked for only about 30 minutes after the start of operation. This results in a substantial reduction in power consumption compared with a case in which, for instance, electric heaters are used as the heating devices 24.

### [Second Embodiment]

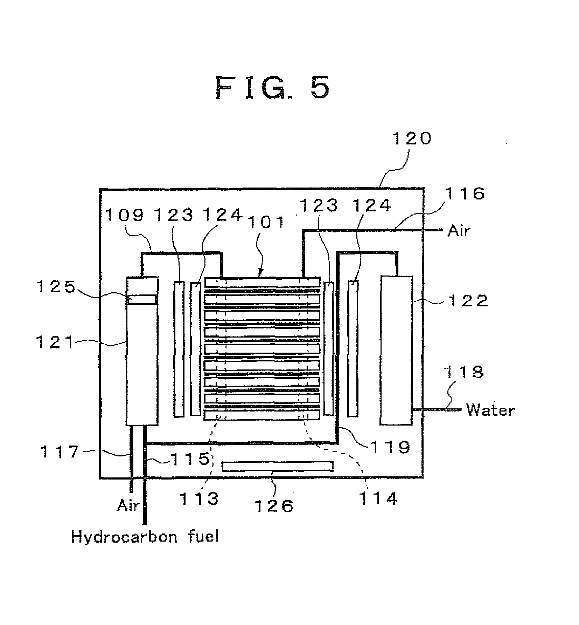

This second embodiment corresponds to the second mode for implementing the invention.
The second embodiment of the invention will be described below with reference to Figure 5 through Figure 7.

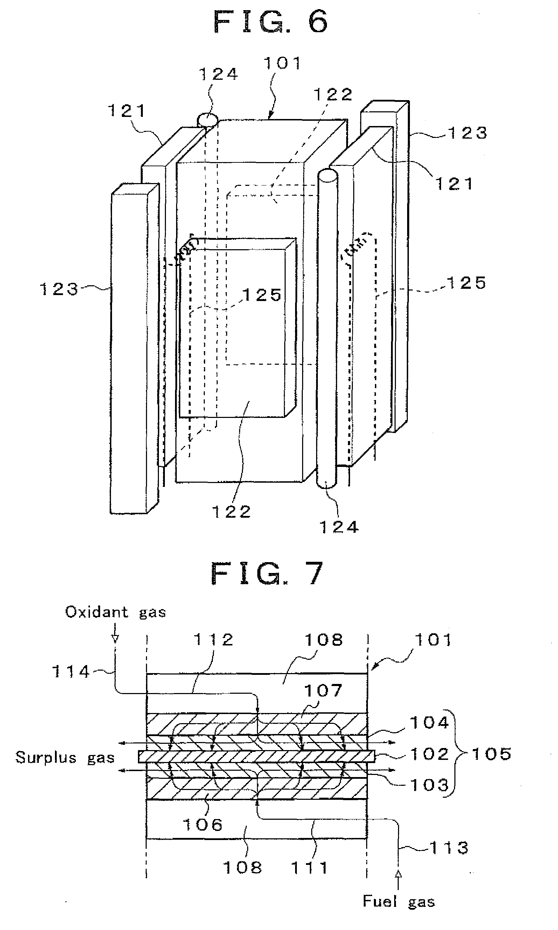

Figure 5 shows the schematic internal configuration of a solid oxide type fuel cell to which the invention is applied; Figure 6 shows its internal arrangement; and Figure 7 shows the configuration of the essential part of the fuel cell stack.

As shown in Figure 5 and Figure 6, the solid oxide type fuel cell of this embodiment has a housing 120 (drum) whose internal wall is covered with an insulator (not shown), and a fuel cell stack 101 to generate a power generating reaction is arranged at the center of the insulated housing 120.

The fuel cell stack 101, as shown in Figure 7, has a structure in which a power generating cell 105 comprising a fuel electrode 103 and an air electrode 104 arranged on both sides of a solid electrolyte 102, a fuel electrode current collector 106 outside the fuel electrode 103, an air electrode current collector 107 outside the air electrode 104, and separators 108 outside the current collectors 106 and 107 are stacked in many layers sequentially in the longitudinal direction.

The solid electrolyte 102 is configured of yttria-stabilized zirconia (YSZ) or the like; the fuel electrode 103, of a metal such as Ni or a cermet such as Ni-YSZ; the air electrode 104, of LaMnO₃, LaCoO₃ or the like; the fuel electrode current collector 106, of a spongy porous sintered metal plate of Ni or the like; the air electrode current collector 107, of a spongy porous sintered metal plate of Ag or the like; and the separators 108, of stainless steel or the like.

The separators 108 have a function to electrically connect the power generating cells 105 to one another and to supply reactive gas to the power generating cells 105; they have fuel gas passages 111 which let in fuel gas supplied from a fuel gas manifold 113 from the outer circumferential faces of the separators 108 and discharge it from the substantially central parts of the separators 108 opposite the fuel electrode current collector 106 and oxidant gas passages 112 which let in oxidant gas supplied from an oxidant gas manifold 114 from the outer circumferential faces of the separators 108 and discharge it from the substantially central parts of the faces of the separators 108 opposite the air electrode current collector 107.

The fuel cell stack 101 is formed in a seal-less structure having no anti-gas leak seal on the outer circumferential part of the power generating cells 105; when in operation, as shown in Figure 7, fuel gas and oxidant gas (air) supplied from the substantially central parts of the separators 108 to the power generating cells 105 through the fuel gas passages 111 and the oxidant gas passages 112 are distributed evenly all over the fuel electrode 103 and the air electrode 104 while being diffused in the outer circumferential direction of the power generating cells 105 to cause a power generating reaction to take place, and unburned gas not consumed in power generating reaction is freely discharged out (within the housing 120) of the outer circumferential part of the power generating cells 105. Incidentally, discharged unburned gas is combusted on the periphery of the fuel cell stack 101.

In the housing 120, in addition to the fuel cell stack 101, reformers 121, water vapor generators 122, combustion catalysts 123, auxiliary electric heaters 124, a temperature raising burner 126 and so forth are arranged in respectively suitable positions around the stack 101. As shown in Figure 6, these members except the temperature raising burner 126 are arranged in pairs opposing each other with the fuel cell stack 101 at the center in-between.

The reformer 121, packed inside with a hydrocarbon catalyst, reforms hydrocarbon fuel (raw fuel) introduced from outside into fuel gas mainly consisting of hydrogen. Further, this reformer 121 has a heater 125 (or an igniter) built into it for actuating partial oxidation, to be described afterwards.
A fuel gas supply pipe 115 and an air supply pipe 117 from outside are connected to the inlet side of the reformer 121, and its outlet side is connected to the fuel gas manifold 113 in the fuel cell stack 101 via piping 109. An oxidant gas supply pipe 116 from outside is connected to the oxidant gas manifold 114 in the fuel cell stack 101.
At the time of actuation, a hydrocarbon fuel such as city gas or LPG is introduced into the fuel gas supply pipe 115, and air is introduced into the air supply pipe 117 and the oxidant gas supply pipe 116.

The water vapor generators 122 are heat exchangers deriving heat from the exhaust heat from the fuel cell stack 101 and intended for obtaining high temperature water vapor required for the reforming reaction; a water supply pipe 118 is connected to their inlet side, and the outlet side is connected to the fuel gas supply pipe 115 by a water vapor guide pipe 119. During power generating operation, high temperature water vapor from these water vapor generators 122 is introduced into the fuel gas supply pipe 115 via the vapor guide pipe 119.

The combustion catalysts 123 are provided as combusting means for unburned gas discharged from the fuel cell stack 101, and are arranged in the stacking direction. As these combustion catalysts 123, for instance what uses thin plate-shaped honeycomb catalysts with Pt (platinum), Pd (palladium) or the like carried by alumina carriers can be applied.
Further in this embodiment, in addition to these combustion catalysts 123, the auxiliary electric heaters 124 or the like are also arranged as combusting means for unburned gas, and it is of course possible to use these combustion catalysts 123 and auxiliary electric heaters 124 in combination. At any rate, unburned gas is quickly ignited and burned by these combusting means in the vicinity of the stack, and the whole stack is heated efficiently and uniformly.

Next, one embodiment of the operating method of solid oxide type fuel cells according to the invention will be described.

In the solid oxide type fuel cell of the configuration described above, at the time of actuation (when the operation is started), a temperature raising burner 126 is ignited to start raising the temperature of the fuel cell stack 101. The partial oxidation actuating heaters 125 built into the reformers 121 are then operated and, at the same time, hydrocarbon fuel and air are introduced into the reformers 121 respectively from the fuel gas supply pipe 115 and the air supply pipe 117. The mixed gas of these hydrocarbon fuel and air is ignited by the partial oxidation actuating heater 125 to give rise to a partial oxidizing reaction in the reformers 121.

In this partial oxidizing reaction, part of the hydrocarbon fuel is burned to generate nitrogen and water (water vapor) and, at the same time, a reforming reaction occurs among the resultant combustion heat, water vapor arising from the combustion and the remaining hydrocarbon fuel not involved in the combustion (namely the partial oxidizing reaction) to generate reductive gas deriving from hydrogen and nitrogen (partial oxidation reforming reaction). The reductive gas in the reformers 121 is supplied into the power generating cells 105 via the piping 109 and the fuel gas manifold 113, thereby enabling the ambience of the fuel electrode to be kept in a reduction condition from immediately after actuation.
On the other hand, unburned gas discharged from the outer circumferential part of the fuel cell stack 101 of the seal-less structure is burned around the stack by the action of the combustion catalysts (the auxiliary electric heaters 124 are turned on in advance if necessary), and the resultant radiant heat warms and raises the temperature of the fuel cell stack 101 from the outer circumferential part.

As the stack temperature rises, the quantity of air supplied to the reformers 121 is gradually decreased and water vapor is supplied from the water vapor generators 122; when the stack temperature has risen to the working temperature of around 500°C, a shift to water vapor reforming by hydrocarbon fuel and water vapor takes place (auto-thermal reforming reaction). In this while, hydrogen-containing reductive gas continues to be generated by the reformers 121 and supplied to the power generating cells 105, with the result that the reduction condition of the fuel electrode ambience is continuously maintained.

During the power generating operation after the temperature rise, a mixed gas of water vapor from the water vapor generators 122 and hydrocarbon fuel from the fuel gas supply pipe 115 is supplied to the reformers 121, and hydrogen-rich reformed gas is generated by the water vapor reforming reaction in the reformers 121; the supply of the reformed gas to each of the power generating cells 105 causes a power generating reaction to take place in the fuel cell stack 101. Incidentally, the supply of air to the reformers 121 by the air supply pipe 117 is stopped during power generating operation.

Although the supply of reformed gas to the fuel cell stack 101 is stopped when the temperature has fallen at the time of shutdown, the supply of hydrocarbon fuel is gradually reduced even during the temperature falling process to cause the partial oxidation reforming reaction or the auto-thermal reforming reaction to take place in the reformers 121, and the continuation of these reactions at least until the stack temperature falls to 300°C or below to supply reductive gas containing hydrogen to the power generating cells 105, enabling the fuel electrode ambience to be maintained in the reduction condition.
This is because the transition of the fuel electrode from the reduction condition in the high temperature ambience after the operation stop (300°C or above) causes the fuel electrode 103 to be oxidized. Therefore, it is necessary at the time of temperature fall to keep the fuel electrode in the reduction condition until the stack temperature falls to 300°C or below.

As described so far, the operating method according to the invention causes a reforming reaction to be generated in the reformers by the heating ensuing from the partial oxidizing reaction or the auto-thermal reaction during the temperature rise at the time of actuation and the temperature fall at the time of shutdown, and by supplying the fuel electrode with the reductive gas containing hydrogen generated by these reactions enables purging to keep the fuel electrodes 103 of the power generating cells 105 in the reduction condition; oxidation of the power generating cells 105 in the temperature rising or falling cycle and the consequent performance deterioration of the power generating cells 105 can be thereby prevented, and this feature contributes to elongating the service life.
In addition, since no purge requiring a large quantity of nitrogen gas as in the conventional practice is needed, the need to install a purging gas supply line including a nitrogen cylinder, for instance, is eliminated, resulting in simplified maintenance work, and the device itself is simplified and can be made more compact.
Furthermore, where the unburned gas discharged from the fuel cell stack 101 is burned by combusting means such as combustion catalysts, the heat of combustion facilitates raising the temperature of the fuel cell stack 101 including the reformers 121, and this serves to reduce the length of time required for actuation.

In particular, solid oxide type fuel cells of the seal-less structure requires a large quantity of purging at the time of actuation or shutdown on account of such reasons as the high working temperature, the long time taken to start or stop and the susceptibility of the cells to inflow of oxygen-containing gas from outside, but the operating method according to the present invention which requires no purging with inert gas is extremely useful for such fuel cells.

### [Third Embodiment]

This embodiment corresponds to the third mode for implementing the invention.
The third embodiment of the invention will be described below with reference to drawings.

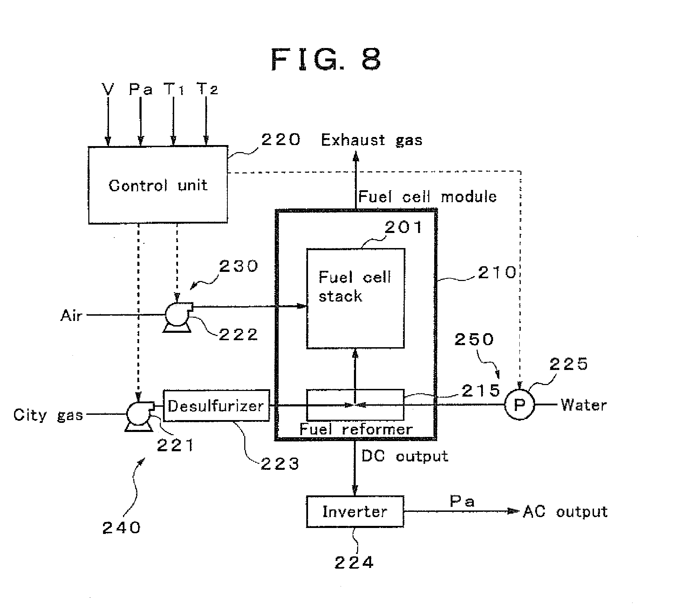

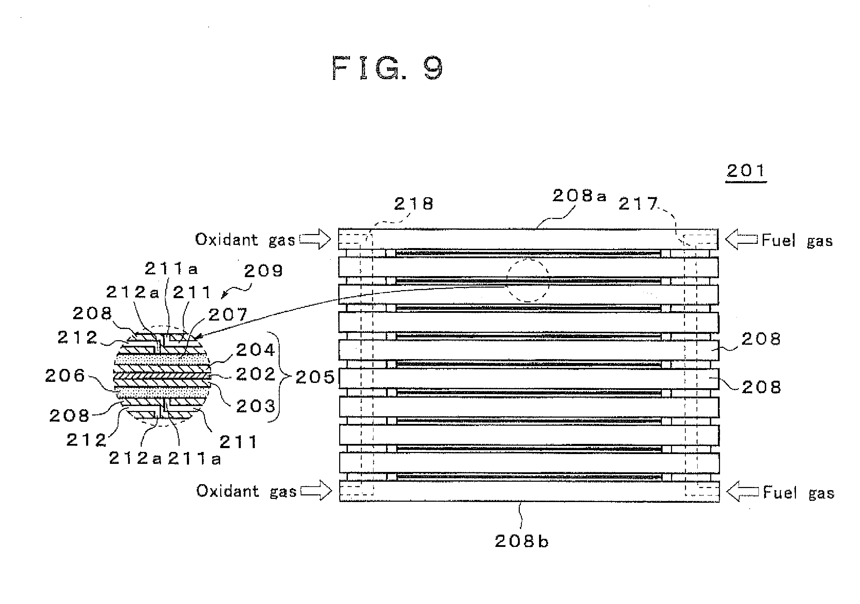

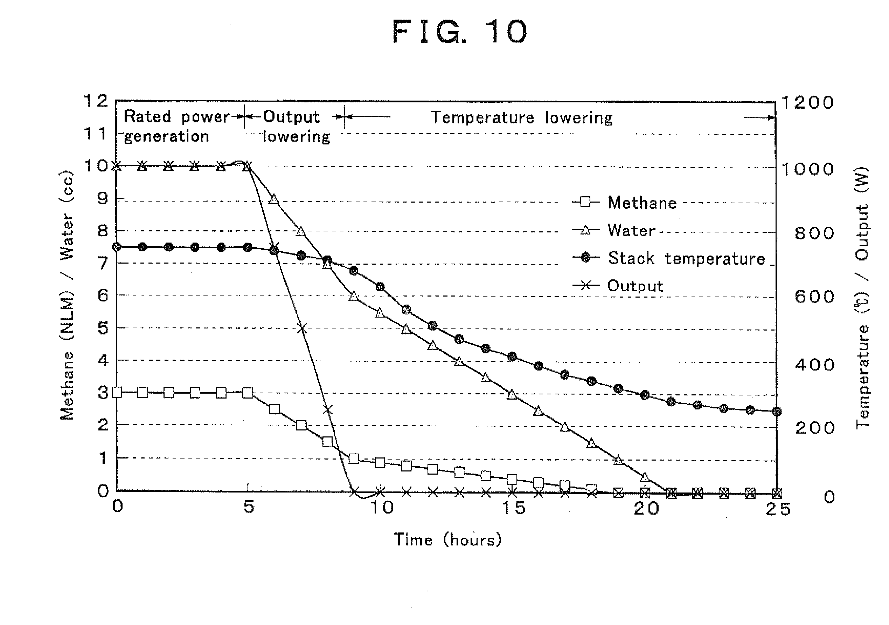

Figure 8 shows the schematic configuration of a fuel cell power generating device to which the invention is applied; Figure 9 shows the configuration of a fuel cell stack for use in this fuel cell power generating device; and Figure 10 shows the shutdown control figure according to the present invention.

The fuel cell power generating device of this embodiment, as shown in Figure 8, is configured of a fuel cell module 210 in which a solid oxide type fuel cell 201 (fuel cell stack 201) which generates a D.C. output according to the supply quantity of fuel gas and the supply quantity of air, a fuel reformer 215 which reforms a mixture gas of fuel gas (e.g. methane gas or city gas) and water vapor into hydrogen-rich gas and supplies it to the fuel cell stack 201 and the like are accommodated into a thermally insulating housing; a fuel supply line 240 which is composed around the fuel cell module 210 of a fuel gas blower 221, a desulfurizer 223 and various fuel gas supply pipes and introduces fuel gas into the fuel reformer 215; an air supply line 230 which is composed of an air blower, air supply pipes and the like and supplies oxidant gas (air) to the fuel cell stack 201; a water supply line 250 which is composed of a water supply pump 225 and a water supply pipe and introduces water (incidentally this water is turned into water vapor by a water vapor generator not shown within the fuel cell module) into the fuel cell module; an inverter 224 which converts the D.C. output from the fuel cell stack 201 into an A.C. output and supplies A.C. power Pa to an external load (not shown); and a control unit 220 which controls the flow rates in the air supply line 230, the fuel supply line 240 and the water supply line 250 among other elements.

Further it is so disposed that various items of detection information sent by detectors (not shown) arranged in suitable positions in the fuel cell power generating device including cell voltage information V, stack temperature information T1, water vapor temperature information T2 and output power information Pa are inputted to this control unit 220.

The fuel cell stack 201 here is formed, as shown in Figure 9, by stacking in the longitudinal direction a large number of unit cells 209 each configured of a power generating cell 205 on both faces of whose solid electrolyte layer 202 a fuel electrode layer 203 and an air electrode layer 204 are arranged; a fuel electrode current collector 206 arranged outside the fuel electrode layer 203; an air electrode current collector 207 arranged outside the air electrode layer 204; and separators 208 arranged outside the current collectors 206 and 207.

Out of the constituent elements of the unit cell 209, the solid electrolyte layer 202 is configured of yttria-stabilized zirconia (YSZ) or the like; the fuel electrode layer 203, of a metal such as Ni or Co or a cermet such as Ni-YSZ or Co-YSZ; the air electrode layer 204, of LaMnO₃, LaCoO₃ or the like; the fuel electrode current collector 206, of a spongy porous sintered metal plate of Ni-based alloy or the like; the air electrode current collector 207, of a spongy porous sintered metal plate of Ag-based alloy or the like; and the separators 208, of stainless steel or the like.

The separators 208 have a function to electrically connect the power generating cells 205 to one another and to supply reactive gas to the power generating cells 205; they have fuel gas passages 211 which let in fuel gas supplied from the outer circumferential faces of the separators 208 and discharge it from the substantially central parts 211a of the separators 208 opposite the fuel electrode current collector 206 and oxidant gas passages 212 which let in oxidant gas from the outer circumferential faces of the separators 208 and discharge it from the substantially central parts 212a of the faces of the separators 208 opposite the air electrode current collector 207.

Within the fuel cell stack 201, a fuel gas manifold 217 and an oxidant gas manifold 218 extending in the stacking direction are formed; reformed fuel gas circulates in the manifold 217, externally supplied air circulates in the manifold 218, and the gases are introduced from the manifolds 217 and 218 into the gas passages 211 and 212 of the separators 208 and are discharged from gas outlets 211a and 212a to be distributed and supplied to the electrodes of the power generating cells. A pair of end plates 208a and 208b formed of stainless steel or the like are disposed at both ends of the fuel cell stack 201, and the power generated by the fuel cell stack 201 can be taken out via these end plates 208a and 208b.

The fuel cell stack 201 is formed in a seal-less structure in which an anti-gas leak seal is deliberately dispensed with on the outer circumferential part of the power generating cells 205; when in operation, surplus gas (high temperature exhaust gas) unconsumed in the power generation can be freely discharged from the outer circumferential part of the power generating cells 205 within the housing. Incidentally, the high temperature exhaust gas discharged within the inner space of the housing is discharged out of the module through an upper exhaust port.

Next, the shutdown control of the fuel cell power generating device of the above-described configuration will be described with reference to Figure 10. This shutdown control is accomplished with the control unit 220 on the basis of various items of detection information (V, Pa, T1, T2 and so on) sent by the detectors referred to above.

The shutdown control shown in Figure 10 is carried out in a state in which the flow rate of air supplied to the fuel cell stack 201 is maintained at a fixed level. In Figure 10, the left vertical axis represents the supply quantity of fuel gas (methane) and the supply quantity of water, which is the source of water vapor, while the right vertical axis represents the stack temperature and the cell output and the horizontal axis represents the time elapsed.

As shown in Figure 10, when a shutdown action is taken during a period of rated power generation (1 kW in output at the stack temperature of 750°C), the cell output is lowered in about four hours from 1 kW to 0 W (output lowering period) while reducing the flow rates of methane and water supplied to the fuel cell module 210, and after that, the stack temperature is lowered in about 15 hours from about 700°C to 300°C or below (temperature lowering period). The present invention features purge processing to avert the phenomenon of fuel electrode layer oxidation by keeping the fuel electrode layer side in a reduction condition in the high temperature ambience during the output lowering period and the temperature lowering period after the action to stop operation.
Thus, the shutdown control in this embodiment is intended to maintain, even when power generation is stopped, the reductiveness of the fuel electrode layer by continuing to supply small quantities of methane and water to the fuel cell module 210, generating water vapor by utilizing the thermal capacity of the fuel cell module 210, generating hydrogen by reforming reaction and supplying mixed gas with water vapor to the fuel electrode layer side.

Incidentally, in this shutdown control the flow rates of methane and water can be varied by regulating with the control unit 220 the actions of the fuel gas blower 221 (which may be a control valve) or the water supply pump 225 (which may be a control valve).

In this shutdown control, regarding the methane flow rate, it is necessary to reduce the supply quantity of methane so that the cell voltage V can be kept no lower than 0.5 V when the stack temperature T1 is 300°C.
The reason is that stopping the supply of methane when the stack temperature T1 is 300°C or above, the fuel electrode layer which mainly consists of Ni may be oxidized by that heat to generate NiO, and such an oxidation-reduction reaction of the fuel electrode layer would seriously deteriorate the performance of the power generating cell. Therefore, until the stack temperature T1 falls to around 300°C, the methane flow rate should be gradually reduced so that the cell voltage V may not fall to less than 0.5 V as shown in Figure 10. This enables the fuel electrode layer side to be kept in the reduction condition. Incidentally, in controlling the methane flow rate, the stack voltage may be monitored instead of the cell voltage V.

Regarding the water flow rate, on the other hand, the supply quantity of water should be decreased so as to keep the water vapor temperature at or above 200°C when water supply is stopped. The reason is that the temperature of water vapor will drop to 100°C in a stroke if the water vapor temperature comes down to 200°C or below, making it difficult to continuously generate water vapor, with the consequence that liquid water, instead of water vapor, is supplied into the cells, which might be thereby deteriorated or cracked.

As hitherto described, according to the present invention, the fuel electrode layer can be kept in the reduction condition at the time of stopping power generation in the high temperature ambience after the power generation stop by supplying water and fuel gas to the fuel cells while reducing the flow rates thereof, and oxidation of the power generating cells in the temperature rising or falling cycle and the consequent performance deterioration of the power generating cells can be prevented, thereby enabling the service life to be elongated.
In addition, since this shutdown method requires no purge with inert gas as in the conventional practice, the need to install a purging gas supply line including an inert gas cylinder (e.g. a nitrogen cylinder) is entirely eliminated, enabling the maintenance work to be simplified as well as the hardware itself to be reduced in size.

In particular in solid oxide type fuel cells, as the working temperature is as high as 600 to 1000°C, the thermal capacity of the module formed of a metal, ceramic or the like is large during the temperature lowering period, making it impossible to reduce the stack temperature in a short period of time, secure purging is required at the time of shutdown on account of such reasons as the sustained high temperature ambience and, in a seal-less structure, the susceptibility to inflow of external oxygen-containing gas (within the fuel cell module) into the cells due to the decrease of the battery pressure; the shutdown method according to the present invention which requires no purging with inert gas is extremely effective for such fuel cell working at a high temperature.

### Industrial Applicability

The present invention can provide a solid oxide type fuel cell in which reductive reformed gas containing hydrogen is generated from the initial stage of actuation by heating a reformer and a water vapor generator in the fuel module with a heating device at the time of actuation, and which is enabled to be actuated rapidly while being supplied with the purge gas on the fuel electrode side of the power generating cell together with an operating method of this fuel cell.
Also the present invention can provide an operating method of fuel cells which enables a temperature raising or lowering action at the time of actuation or shutdown without requiring a separate supply line for purging gas.
The present invention is also directed to the following embodiments:
1. A solid oxide type fuel cell wherein a fuel cell assembly is formed by aggregating a plurality of power generating cells and accommodating the assembly into a housing and a power generating reaction is generated by supplying reformed gas into said fuel cell assembly during operation, wherein: a reformer or a reformer and a water vapor generator are installed in said housing and a heating device for heating at least said reformer is arranged.
2. The solid oxide type fuel cell according to embodiment 1, wherein an electric heater or a combustion burner is used as said heating device.
3. The solid oxide type fuel cell according to embodiment 1, wherein a combustion catalyst for burning reformed gas discharged from the fuel cell assembly or a heater for igniting reformed gas is arranged on the periphery of said fuel cell assembly.
4. The solid oxide type fuel cell according to embodiment 1, wherein said solid oxide type fuel cell is a solid oxide type fuel cell of seal-less structure wherein the residual gas not used in the power generating reaction is burned outside the fuel cell assembly.
5. An operating method of a solid oxide type fuel cell in which a fuel cell assembly is formed by aggregating a plurality of power generating cells and accommodating the assembly into a housing and a power generating reaction is generated by supplying reformed gas into said fuel cell assembly during operation, wherein: a reformer, a water vapor generator and a heating device are provided; at least said reformer is heated with said heating device at the time of actuating the fuel cell; fuel gas and water vapor from said water vapor generator are supplied to said reformer which has been heated to generate reformed gas whose main component is hydrogen; and the reformed gas is supplied to said fuel cell assembly to raise the temperature of said fuel cell assembly while keeping the fuel electrode of said power generating cell in a reduction condition.
6. The operating method of the solid oxide type fuel cell according to embodiment 5, wherein the reformed gas whose main component is hydrogen supplied to said fuel cell assembly is discharged from the fuel cell assembly and burned to raise the temperature of said fuel cell assembly.
7. An operating method of a fuel cell whereby raw fuel is reformed with a reformer and the reformed gas is supplied to a power generating cell to perform power generating operation, wherein: said fuel cell is raised in temperature at the time of starting operation while keeping the ambience of the fuel electrode in a reduction condition by generating with said reformer reductive gas containing hydrogen by partial oxidation reforming reaction or auto-thermal reforming reaction and supplying said reductive gas to the fuel electrode of the power generating cell.
8. An operating method of a fuel cell whereby a reformer is provided, raw fuel is reformed with the reformer and the reformed gas is supplied to a power generating cell to perform power generating operation, wherein: said fuel cell is lowered in temperature at the time of shutdown operation while keeping the ambience of the fuel electrode in a reduction condition by generating with said reformer reductive gas containing hydrogen by partial oxidation reforming reaction or auto-thermal reforming reaction and supplying said reductive gas to the fuel electrode of the power generating cell.
9. The operating method of the fuel cell according to embodiment 8, wherein the ambience of the fuel electrode is kept in a reduction condition until the temperature of said fuel cell at least is lowered to 300°C or below.
10. The operating method of the fuel cell according to embodiment 7, wherein the unburned fuel gas discharged from said fuel cell is burned with combusting means and the resultant combustion heat is utilized for raising the temperature.
11. The operating method of the fuel cell according to embodiment 7, wherein said fuel cell is a solid oxide type fuel cell of a seal-less structure in which fuel not used in the reaction is discharged from the outer circumferential part of said power generating cell to be combusted.
12. The operating method of the fuel cell according to embodiment 8, wherein said fuel cell is a solid oxide type fuel cell of a seal-less structure in which fuel not used in the reaction is discharged from the outer circumferential part of said power generating cell to be combusted.

## Claims

1. A fuel cell shutdown method whereby a power generating reaction is generated by supplying fuel gas to a fuel electrode layer side and oxidant gas to an air electrode layer side, wherein:
the stack temperature is lowered while keeping the fuel electrode layer side in a reduction condition by supplying water and hydrogen or hydrocarbon fuel to said fuel cell while reducing the flow rate thereof at the time of stopping power generation.

2. The fuel cell shutdown method according to Claim 1, wherein the supply quantity of said hydrogen or hydrocarbon fuel is reduced so that the cell voltage of said fuel cell is 0.5 V or above when the stack temperature is 300°C.

3. The fuel cell shutdown method according to Claim 1, wherein, when the supply of water to said fuel cell is to be stopped, the supply quantity of water is reduced so that the water vapor temperature attributable to the water is not less than 200°C.

4. A fuel cell power generating device provided with fuel cells which supply electric power according to the supply quantity of fuel gas and the supply quantity of oxidant gas, a fuel supply line which supplies fuel gas to the fuel cells, an oxidant gas supply line which supplies oxidant gas, a water supply line which supplies water, and a control unit which controls these lines, wherein:
said control unit performs control to reduce the stack temperature while keeping the fuel electrode layer side in the reduction condition at the time of stopping power generation by regulating said lines so as to supply water and hydrogen or hydrocarbon fuel to said fuel cells while reducing the flow rates thereof.

5. The fuel cell power generating device according to Claim 4 **characterized by** being a solid oxide type fuel cell of seal-less structure wherein the residual gas not used in the power generating reaction is discharged from the outer circumferential part of power generating cells
